# FASCICULE DE BREVET EUROPEEN

(11) **EP 4 526 086 B1**
(45) Date de publication et mention de la délivrance du brevet: **28.10.2026**
(21) Numéro de dépôt: 23726142.5
(22) Date de dépôt: 18.05.2023
(51) Int. Cl.: B25J 9/08, A63H 33/04, B29C 64/129, A63H 33/08, H01F 1/00, B33Y 10/00, B25J 18/06, B25J 19/00, H01F 41/02, B33Y 80/00

(54) **OBJET OU STRUCTURE MULTI-MATÉRIAUX TRANSFORMABLE À BASE DE MATÉRIAUX ACTIFS ET PROCÉDÉ D'IMPRESSION 4D PAR ASSEMBLAGE VOLUMIQUE**
TRANSFORMIERBARE MULTIMATERIALSTRUKTUR ODER OBJEKT AUF BASIS VON AKTIVEN MATERIALIEN UND VERFAHREN ZUM 4D-DRUCKEN DURCH VOLUMENHEFTEN
TRANSFORMABLE MULTIMATERIAL STRUCTURE OR OBJECT BASED ON ACTIVE MATERIALS AND METHOD FOR 4D PRINTING BY VOLUME STITCHING

(30) Priorité: 19.05.2022 FR 2204779
(43) Date de publication de la demande: 26.03.2025
(73) Titulaire: Centre National de la Recherche Scientifique, 75016 Paris (FR); Université de Technologie de Belfort-Montbéliard, 90010 Belfort Cedex (FR)
(72) Inventeur: DEMOLY, Frédéric, 90400 DORANS (FR); ANDRE, Jean-Claude, 54000 NANCY (FR); PROD'HON, Romaric, 90140 BOUROGNE (FR)
(74) Mandataire: Hautier IP
(86) Numéro de dépôt international: PCT/EP2023/063445
(87) Numéro de publication internationale: WO 2023/222861

(56) Documents cités:
- WO-A1-2014/138123
- WO-A1-2019/195417
- WO-A1-2021/221248
- KR-B1- 101 950 654
- US-A1- 2015 217 459
- US-A1- 2015 283 474
- US-A1- 2015 310 785

## Description

### Domaine technique

La présente invention se rapporte au domaine technique de l'impression quatre dimensions, dite impression 4D. Cette technique repose sur la réalisation par ajout de matière d'objets à trois dimensions, dits 3D. Les objets, dits 4D, sont alors capables de changer de forme ou de fonctionnalité au cours du temps une fois stimulés.

### Etat de la technique antérieure

La technologie d'impression 4D est connue de l'état de l'art. L'impression 4D se limite à l'impression d'objet 4D à partir d'un seul matériau actif sous stimulation externe, rendant la structure souple et peu disposée à satisfaire des contraintes mécaniques élevées.

Les matériaux utilisés sont connus sous le nom de matériaux intelligents ou actifs. Les matériaux intelligents ou actifs sont des matériaux adaptatifs et/ou évolutifs en ce qu'une ou plusieurs de leurs propriétés peuvent être modifiées par application d'un stimulus énergétique.

Toutefois, les techniques de fabrication actuelles, en ce qui concernent les objets ou structure multi-matériaux utilisent des matériaux imprimés par le même procédé de fabrication additive et des matériaux présentant des propriétés presque similaires. Pour prendre en compte le souhait de réalisation d'objets composés de matériaux similaires et dissimilaires, il convient d'user de plusieurs procédés de fabrication additive et donc de couvrir cette technique comme une technique d'assemblage d'éléments hétérogènes préfabriqués. L'utilisation de colles ou d'interfaces adhésives pour solidariser des éléments semblent naturelle. Mal sélectionnées, ces colles peuvent constituer un frein, car elles peuvent limiter la durabilité des assemblages. En outre, les colles jouent un rôle dans le contrôle des changements souhaités de forme des assemblages. Les colles ne permettent pas non plus d'utiliser tous les types de matériaux potentiellement utilisables. Enfin, le procédé de collage peut être irréversible et interdire le désassemblage et la récupération/réutilisation des éléments préfabriqués individuellement.

On connait également dans l'état de la technique des liaisons mécaniques démontables. Toutefois, ces liaisons présentent le problème d'une application irréalisable sur des éléments préfabriqués destinés à avoir des comportements isotropes.

Enfin le document US 20150217459A1 décrit un système de robots mous modulaires utilisant des unités flexibles moulées, assemblables entre elles via des connecteurs mécaniques pour former des actuateurs pneumatiques. Cependant la modularité et la stabilité sont limitées.

Un but de l'invention est notamment :
- de proposer des objets ou structures transformables composés ou contenant au moins un matériau intelligent ou actif, c'est-à-dire pouvant comprendre des matériaux métalliques/céramiques, de préférence des éléments préfabriqués individuels métalliques/céramiques, et des matériaux polymères, de préférence des éléments préfabriqués individuels en polymère, et/ou
- de proposer des objets ou structures transformables composés d'un matériau actif ou intelligent dont la forme et/ou d'autres propriétés physiques et/ou chimiques peuvent être modifiées par application d'un stimulus énergétique, et/ou
- proposer des objets ou structures transformables composés d'un matériau intelligent dont la modification de la forme et/ou d'autres propriétés physiques et/ou chimiques sont améliorées et/ou contrôlées par application du au moins un stimulus, et/ou
- de proposer un procédé de fabrication d'un objet ou structure transformable par assemblage d'éléments préfabriqués individuels, et/ou
- de proposer objet ou structure transformable versatile dont la structure peut être modifiée à tout moment, et/ou
- de proposer un objet ou structure transformable facilement recyclable, et/ou
- de proposer un objet ou structure transformable dont les éléments préfabriqués peuvent être désassemblés individuellement sans être dégradés ni détériorés permettant leur réutilisation éventuelle.

### Présentation de l'invention

A cet effet, il est proposé une structure ou un objet transformable tridimensionnel, dit structure transformable, comprenant un ensemble de composants élémentaires individuels, dit CEIs ou voxels, formant un ensemble monobloc. Un CEI, de préférence chacun des CEIs, comprend, de préférence est constitué de, un matériau actif ou inerte. Au moins une partie de l'ensemble de CEIs comprend au moins trois moyens de liaison. Chaque moyen de liaison d'un CEI considéré est agencé pour coopérer avec au moins un moyen de liaison d'un CEI

adjacent au CEI considéré de sorte à lier, de préférence de manière réversible, le CEI considéré au CEI adjacent, de préférence de sorte à lier le CEI considéré aux CEIs adjacents à ce dernier. Pour au moins une partie de l'ensemble de CEIs, de préférence pour chaque CEI, au moins un des moyens de liaison d'un CEI considéré est, de préférence, situé d'un côté opposé à au moins un autre des moyens de liaison du CEI considéré. L'au moins un partie des CEIs de l'ensemble de CEIs comprend des CEIs dits actifs spatialement disposés, de préférence de manière spécifique et/ou prédéterminée, dans la structure transformable pour qu'au moins une propriété de la structure transformable soit modifiée en réponse à l'application d'au moins un stimulus, de préférence sur toute ou partie de la structure. L'au moins un stimulus est électrique et/ou un champ électrique et/ou un champ magnétique et/ou une variation de température et/ou une onde électromagnétique et/ou un composé environnant la structure transformable ou une variation d'une concentration d'un composé environnant la structure transformable

Les CEIs peuvent être de tailles variées, avantageusement identiques. Avantageusement, les CEIs peuvent être de forme cubique.

Un moyen de liaison peut être un moyen de liaison mécanique, physique et/ou chimique.

La structure transformable peut être définie comme un objet ou une structure intelligente.

De préférence, l'au moins un stimulus est un stimulus énergétique.

De préférence, selon l'invention, il est entendu par structure transformable tridimensionnelle une structure apte et/ou agencée pour modifier une ou plusieurs de ses propriétés géométrique, physiques, mécaniques et/ou chimiques en réponse à l'application d'un stimulus ou de stimuli externes.

De préférence, la structure transformable est apte et/ou agencée pour opérer une fonction de transformation en réponse à l'application d'un stimulus ou de stimuli externes.

De préférence, la structure transformable est apte et/ou agencée pour modifier sa forme et/ou sa géométrie en réponse à l'application d'un stimulus ou de stimuli externes.

De préférence, la structure transformable selon l'invention est agencée pour être désassemblée ou démontée en tout ou partie sans que sa structure et/ou ses propriétés ne soient dégradés ni détériorés.

Il peut être entendu par lier, joindre, unir, associer, maintenir, réunir, assembler, relier, attacher, emboîter ou fixer.

De préférence, un, plusieurs ou chacun des moyens de liaison sont agencés pour lier, de manière réversible, un CEI considéré à un, plusieurs ou chacun des CEI adjacents.

De, préférence, un moyen de liaison ou un moyen d'accouplement d'un CEI considéré et un moyen de liaison ou un moyen d'accouplement d'un autre des CEIs coopérant avec le CEI considéré peuvent former un couple de moyens de liaison ou de moyens d'accouplement.

De préférence, les moyens de liaison et/ou l'agencement des moyens de liaison pour et/ou l'agencement spatial des CEIs actifs permettent à la structure transformable de subir des déformations mécaniques importantes induites par au moins un stimulus énergétique.

De préférence, les CEIs formant ou constituant un pourtour de la structure transformable peuvent comprendre au moins un moyen de liaison et/ou peuvent être liés à au moins un CEIs adjacents. Les CEIs formant ou constituant un pourtour de la structure transformable peuvent comprendre au moins deux, de préférence encoure au moins trois, moyens de liaison.

Il peut être entendu par pourtour de la structure transformable une face externe ou un côté externe de la structure transformable. Le pourtour de la structure transformable peut être continu ou discontinu, c'est-à-dire qu'il peut comprendre des aspérités et/ou creux et/ou évidements et/ou encoches et/ou rainures et/ou fentes et/ou saillies.

De préférence, les CEIs de l'au moins une partie de l'ensemble de CEIs comprenant au moins trois moyens de liaison correspondent aux CEIs ne formant pas ni ne constituant le pourtour de la structure transformable. De préférence encore, les CEIS de l'au moins une partie de l'ensemble de CEIs comprenant au moins trois moyens de liaison correspondent à l'ensemble des CEIs à l'exception des CEIs formant ou constituant le pourtour de la structure transformable.

Les éléments de liaison d'un CEI peuvent être identiques ou différents.

De préférence, chaque moyen de liaison d'un CEI est complémentaire d'au moins un moyen de liaison d'un, de plusieurs ou de chacun des autres CEIs. De préférence encore, chaque moyen de liaison d'un CEI considéré est complémentaire d'au moins un moyen de liaison d'un, de plusieurs ou de chacun des CEIs adjacents au CEI considéré.

De préférence, un moyen de liaison d'un CEI considéré est agencé pour coopérer avec un moyen de liaison d'un CEI adjacent au CEI considéré. De préférence, les moyens de liaisons d'un CEI considéré coopèrent chacun avec au moins un moyen de liaison d'un CEI adjacent distinct au CEI considéré et lient le CEI considéré aux CEI adjacents.

De préférence, l'agencement du la structure transformable la rend versatile, de préférence encore en ce que sa géométrie et/ou sa conformation peut être modifiée par désassemblage, de manière contrôlée, d'une partie des éléments préfabriqués individuellement. La structure transformable peut être totalement désassemblée et les CEIs individuels récupérés et, de préférence, réutilisés ou recyclés.

De préférence, chacun des CEIs de la structure transformable, à l'exception des CEIs formant ou constituant le pourtour de la structure transformable, comprend au moins quatre, de préférence au moins cinq, de préférence encore au moins six, de manière d'avantage préférée au moins huit moyens de liaison.

De préférence, un CEI, de préférence l'ensemble des CEIs, est ou consiste en un élément préfabriqué.

L'ensemble de CEIs peut comprendre, de préférence être constitué, uniquement des CEIs actifs. De préférence, l'ensemble de CEIs comprend des CEIs actifs et des CEIs passifs. Par CEIs passifs, il peut être entendu des CEIs non sensibles à au moins un stimulus, de préférence insensibles à tous types de stimulus. Par CEIs actifs, il peut être entendu des CEIs sensibles à au moins un stimulus. Il peut être entendu par sensibilité à au moins un stimulus, la propension ou l'aptitude qu'à un CEI, ou un matériau, à modifier ses propriétés ou à voir ses propriétés modifiées sous l'effet d'un stimlus.

L'ensemble de CEIs peut comprendre des CEIs actifs et des CEIs passifs. Les CEIs passifs peuvent être :
- agencés pour contribuer et/ou améliorer et/ou contrôler la modification de l'au moins une propriété de la structure transformable, par exemple en répartissant, de manière contrôlée, les contraintes mécaniques, induites par la déformation des CEIs actifs, à l'ensemble de la structure transformable, et/ou
- constitués d'un matériau contribuant à et/ou améliorant et/ou contrôlant la modification de l'au moins une propriété de la structure transformable, par exemple en répartissant, de manière contrôlée, les contraintes mécaniques, induites par la déformation des CEIs actifs, à l'ensemble de la structure transformable.

Un CEI actif et/ou passif peut être constitué d'un matériau identique ou différent à un, plusieurs ou chacun du ou des matériaux constituant les autres CEIs actifs et/ou passifs.

De préférence, les CEIs actifs forment un réseau agencé, de préférence relativement aux CEIs passifs, pour que l'application d'un stimulus énergétique provoque la modification d'au moins une propriété de la structure transformable. De préférence encore, les CEIs actifs forment un réseau, de préférence relativement aux CEIs passifs, agencé pour que l'application localisée d'un stimulus énergétique contribue et/ou améliore et/ou contrôle la modification de l'au moins une propriété de la structure transformable.

De préférence, au moins un, de préférence encore plusieurs ou chacun, des moyens de liaison est un moyen d'accouplement.

De préférence, un moyen d'accouplement ou un moyen de liaison comprend, de préférence est ou est formé par :
- au moins une saillie coopérant avec un creux ou un évidement ou un logement, et/ou
- une entaille ou une encoche coopérant avec une entaille ou encoche, et/ou
- une entaille ou une encoche coopérant avec au moins une excroissance ou saillie, et/ou
- au moins une excroissance ou une saillie coopérant avec au moins une surface ou côté d'un CEI.

Dans la présente demande, il peut être entendu par saillie une excroissance. Dans la présente demande, il peut être entendu par évidement un creux ou un enfoncement ou un logement. Dans la présente demande, il peut être entendu par encoche une entaille.

Un moyen de liaison ou un moyen d'accouplement peut être ou peut comprendre un clavetage, une denture ou mâchoire, couramment désignées par « joint Hirth », une tige, un conduit, un tenon, une mortaise, une rainure, une languette, un mi-bois, une queue droite ou une queue d'aronde.

De, préférence, un moyen de liaison ou un moyen d'accouplement d'un CEI considéré et un moyen de liaison ou un moyen d'accouplement d'un CEI coopérant avec le CEI considéré peuvent former un couple de clavetage, de dentures ou mâchoires réciproques, couramment désignées par « joint Hirth », tige-conduit, tenon-mortaise, rainure-languette, mi-bois, de queue droite, de queue d'aronde ou de denture à tenon.

De préférence, chacun des CEIs comprend quatre côtés ou plus et dans lequel au moins trois des côtés de chacun des CEIs de l'au moins une partie de l'ensemble de CEIs comprenant au moins trois moyens de liaison comprennent chacun au moins un moyen de liaison et lesdits au moins trois côtés de chacun des CEIs de l'au moins une partie de l'ensemble de CEIs comprenant au moins trois moyens de liaison sont chacun liés à un côté d'un autre des CEIs de la structure transformable par au moins un moyen de liaison

De préférence, chacun des CEIs comprend quatre côtés ou plus. De préférence au moins quatre des côtés de chacun des CEIs de l'au moins une partie de l'ensemble de CEIs comprenant au moins trois moyens de liaison comprennent chacun au moins un moyen de liaison. De préférence, les au moins quatre côtés de chacun des CEIS de l'au moins une partie de l'ensemble de CEIs comprenant au moins trois moyens de liaison sont chacun liés à un côté d'un autre des CEIs de la structure transformable par au moins un moyen de liaison.

Il peut être entendu par « côtés » un face ou surface continue ou discontinue. Il peut être entendu par « côtés » une face ou surface à partir de laquelle s'étend une saillie ou dans laquelle est ménagé un évidement.

De préférence, chacun des CEIs comprend, en outre, au moins deux moyens de connexions, de préférence encore au moins trois moyens de connexion, de préférence encore quatre moyens de connexion. De préférence, chaque moyen de connexion d'un CEI considéré est agencé pour coopérer avec au moins un moyen de connexion d'un CEI adjacent au CEI considéré de sorte à former, de préférence de manière réversible, :
- un conduit pour le transit d'un fluide et/ou d'une énergie et/ou d'un signal depuis le CEI considéré vers le CEI adjacent, ou inversement, ou
- une connexion électrique entre le CEI considéré et le CEI adjacent.

De préférence, pour chaque CEI, au moins un des moyens de connexion d'un CEI considéré est situé d'un côté opposé à au moins un autre des moyens de connexion du CEI considéré.

De préférence, chaque moyen de connexion d'un CEI est complémentaire d'au moins un moyen de connexion d'un, de plusieurs ou de chacun des autres CEIs. De préférence encore, chaque moyen de connexion d'un CEI considéré est complémentaire d'au moins un moyen de connexion d'un, de plusieurs ou de chacun des CEIs adjacents au CEI considéré.

De préférence, chaque moyen de connexion d'un CEI considéré est agencé pour coopérer avec un moyen de connexion d'un CEI adjacent au CEI considéré de sorte à permettre le transit d'un fluide et/ou d'une énergie et/ou d'un signal à travers le CEI considéré vers, ou inversement depuis, au moins trois CEIs adjacents au CEI considéré.

De préférence, l'au moins un stimulus :
- est électrique, de préférence un courant ou une tension, et/ou est une variation de température et/ou est une force ou contrainte ou pression mécanique et/ou est un composé circulant dans la structure transformable ou une variation d'une concentration d'un composé circulant dans la structure transformable,
- transite ou s'écoule ou se propage, au moins en partie, dans ou à travers la structure transformable, de préférence dans ou à travers les CEIs actifs et/ou passifs, par les moyens de connexion.

De préférence, la structure transformable est agencée pour que l'au moins un stimulus transite ou s'écoule ou se propage, au moins en partie, dans ou à travers les moyens de connexion des CEIs.

Le composé peut être liquide et/ou gazeux et/ou solide et/ou un gel. Le composé solide peut être en suspension dans un liquide ou peut être un soluté.

De préférence, lorsque l'au moins un stimulus transite ou s'écoule dans ou à travers la structure transformable, l'au moins un stimulus est injecté dans au moins un moyen de connexion d'un ou de plusieurs des CEIs formant ou constituant le pourtour de la structure transformable. De préférence, au moins un moyen de connexion du ou des CEIs, dans lequel ou lesquels l'au moins un stimulus est injecté, est compris ou situé ou disposé dans un côté externe ou face externe de la structure transformable. De préférence, le côté externe ou la face externe de la structure transformable est constitué ou formé par un côté externe ou une face externe des CEIs formant ou constituant le pourtour de la structure transformable.

De préférence, l'au moins un stimulus est, de préférence, un stimulus énergétique. De préférence encore, l'au moins un stimulus, de manière préférée lorsqu'au moins un stimulus est externe à la structure transformable ou est appliqué à ou depuis l'extérieur de la structure transformable, est électrique, de préférence un courant ou une tension, et/ou est un champ électrique et/ou est un champ magnétique et/ou est une variation de température et/ou est une onde électromagnétique et/ou est une force ou contrainte ou pression mécanique et/ou est un composé environnant la structure transformable ou une variation d'une concentration d'un composé environnant la structure transformable.

Lorsque l'au moins un stimulus est externe à la structure transformable, l'au moins un stimulus peut se propager depuis l'extérieur de la structure transformable dans ou à travers la structure transformable.

La structure transformable peut être agencée pour qu'au moins une de ses propriétés, de préférence pour qu'au moins une des propriétés d'au moins un des CEIs actifs, soit modifiée en réponse à l'application d'au moins un stimulus externe, se propageant dans ou à travers la structure transformable et/ou en réponse à au moins un stimulus transitant ou s'écoulant dans ou à travers la structure transformable par les moyens de connexion des CEIs.

De préférence, l'onde électromagnétique présente une ou plusieurs longueurs d'ondes monochromatiques spécifiques ou prédéterminées et/ou peut être une gamme de longueurs d'ondes spécifiques ou prédéterminées. De préférence, la ou les longueurs d'ondes monochromatiques ou la gamme de longueurs d'ondes électromagnétiques est comprise dans l'UV et/ou l'infrarouge et/ou le visible.

De préférence, la modification, ou le changement, d'au moins une propriété de l'objet ou la structure transformable est un changement de forme et/ou de géométrie et/ou de configuration et/ou de volume et/ou de propriétés optiques et/ou de propriétés mécaniques et/ou de propriétés chimiques et/ou de conductivité thermique et/ou de conductivité électrique.

Il peut être entendu par propriétés optiques des changements d'indice de réfraction et/ou de polarisation et/ou de turbidité et/ou de couleur.

Il peut être entendu par propriétés mécaniques de la structure transformable ou d'un CEI un module d'Young, un module de cisaillement ou le coefficient de Poisson. De préférence, la structure transformable dispose d'un module d'Young compris entre 10 et 10⁷ Pascal.

De préférence, les CEIs comprennent ou sont constitués d'un polymère et/ou d'un métal et/ou d'une céramique et/ou d'un gel, de préférence viscoélastique, et/ou d'un matériau piézo-électrique et/ou d'un matériau à mémoire de forme.

Selon l'invention, il est également proposé un procédé de fabrication d'un d'une structure transformable tridimensionnelle monobloc, de préférence de la structure transformable selon l'invention. Le procédé comprend l'étape consistant à fournir un ensemble de composants élémentaires individuels, dits CEIs, un CEI comprenant un matériau actif ou inerte. Au moins une partie des CEIs de l'ensemble de CEIs comprend au moins trois moyens de liaison. Pour l'au moins une partie des CEIS de l'ensemble de CEIs, au moins un des moyens de liaison d'un CEI considéré est, de préférence, situé d'un côté opposé à au moins un autre des moyens de liaison du CEI considéré et au moins une partie de l'ensemble de CEIs comprend des CEIs dits actifs.

Le procédé de fabrication comprend, en outre, l'étape consistant à assembler, via un système robotisé, de préférence de manière réversible, les CEIs de l'ensemble en emboitant, successivement, au moins un moyen de liaison d'un CEI avec au moins un moyen de liaison d'un autre des CEIs et disposer spatialement, de préférence de manière spécifique et/ou prédéterminée, les CEIs actifs dans l'assemblage, de préférence dans la structure transformable, les CEIs étant, de préférence, obtenu par fabrication additive, pour qu'au moins une propriété de la structure transformable soit modifiée en réponse à l'application d'au moins un stimulus, de préférence sur tout ou partie ou à l'extérieur de la structure transformable.

De préférence, selon une première alternative, l'étape consistant à assembler les CEIs de l'ensemble de CEIs, dite étape d'assemblage, comprend :
- la formation, simultanément ou subséquemment, d'au moins deux couches ou plans monobloc distincts de CEIs, en emboitant, successivement, au moins un moyen de liaison d'un CEI avec au moins un moyen de liaison d'un autre des CEIs, puis
- l'assemblage d'une couche formée avec une autre des couches formées en emboitant au moins un moyen de liaison de chacun des CEIs d'une couche formée avec au moins un moyen de liaison de chacun des CEIs d'une autre des couches formées.

De préférence, selon une seconde alternative, combinable avec la première alternative, l'étape d'assemblage des CEIs comprend :
- la formation, simultanément ou subséquemment, d'au moins trois rangées monobloc distinctes de CEIs, en emboitant, successivement, au moins un moyen de liaison d'un CEI avec au moins un moyen de liaison d'un autre des CEIs, puis
- l'assemblage d'une rangée formée avec une autre des rangées formées, en emboitant au moins un moyen de liaison de chacun des CEIs d'une rangée formée avec au moins un moyen de liaison de chacun des CEIs d'une autre des rangées formées, pour former au moins une couche ou plan monobloc de CEIs, puis
- l'assemblage de la couche formée avec une autre rangée formée ou, respectivement, avec une autre des couches formées en emboitant au moins un moyen de liaison de chacun des CEIs d'une couche formée avec au moins un moyen de liaison de chacun des CEIs d'une autre rangée formée ou, respectivement, avec au moins un moyen de liaison de chacun des CEIs d'une autre des couches formées.

L'impression 4D multi-matériaux permet de composer des objets ou structures dissimilaires dont au moins un est actif. Cela offre une liberté plus importante pour distribuer des comportements dans l'espace et le temps mais également pour intégrer la stimulation énergique au cœur de l'objet ou la structure. La présente invention concerne l'impression 4D multi-matériaux d'objets ou de structures transformables dans une stratégie de construction volume par volume ce qui se traduit par l'assemblage d'éléments préfabriqués appelés voxels ou CEIs (d'où la dénomination de fabrication additive). Ces voxels sont constitués de matériaux permettant le changement de forme et/ou de propriété des objets 4D sous l'action d'une stimulation énergétique pouvant être externe et/ou interne.

Dans la présente demande, à défaut d'indication contraire ou d'incompatibilité, les caractéristiques décrites s'appliquent aux première et seconde alternatives du procédé.

Il peut être entendu par « associer » joindre ou lier ou réunir ou attacher.

Il peut être entendu par « emboiter » encastrer ou enchâsser ou imbriquer ou accoupler ou engrener ou insérer.

De préférence, le système robotisé comprend un bras articulé. De préférence, le système robotisé, de préférence le bras articulé, est apte et/ou agencé pour déplacer les CEIs selon trois axes, de préférence encore selon six axes. De préférence, le bras articulé est un bras dit six axes.

Le système robotisé peut être apte et/ou agencé pour se déplacer.

Le système robotisé peut être couplé ou peut comprendre des moyens optiques ou des systèmes de reconnaissances de forme pour guider et/ou contrôler et/ou assister le système robotisé lors de l'assemblage.

De préférence, le procédé de fabrication comprend l'étape consistant à former et assembler une rangée ou une couche de CEIs sur un pavage. De préférence, le pavage comprend un ensemble de sites de réception et chaque site de réception comprend au moins un moyen de liaison réversible agencé pour coopérer avec au moins un moyen de liaison d'au moins un CEI. De préférence, l'étape de formation et d'assemblage de la rangée ou de la couche de CEIs sur le pavage consiste à emboiter au moins un moyen de liaison de chacun des CEIs de la rangée ou de la couche avec au moins un moyen de liaison réversible d'un site de réception différent.

Selon la première alternative, l'étape consistant à former et assembler une rangée de CEIs sur le pavage peut comprendre ou consister à former et déposer une première rangée de CEIs de la structure transformable sur laquelle et/ou à partir de laquelle une ou plusieurs autres rangées de CEIs vont être déposées.

L'étape consistant à former et assembler une couche de CEIs sur le pavage peut consister à former et déposer une première couche de CEIs de la structure transformable sur laquelle et/ou à partir de laquelle une ou plusieurs autres couches de CEIs vont être déposées ou sur laquelle et/ou à partir de laquelle l'ensemble des autres couches de la structure transformable vont être déposées.

De préférence, l'étape d'assemblage des CEIs selon les premières et seconde alternatives comprend l'étape consistant à former et assembler une rangée ou une couche de CEIs sur un pavage.

De préférence, l'étape consistant à déposer et assembler une première rangée ou une première couche de CEIs sur le pavage est partie de ou est comprise dans l'étape consistant à former au moins deux couches monobloc distinctes de CEIs selon les premières et secondes alternatives et/ou l'étape consistant à former au moins trois rangées monobloc distinctes de CEIs selon la seconde alternative et/ou l'étape consistant à assembler une rangée ou, respectivement, une couche formée avec une autre des couches formées ou, respectivement, avec une autre des rangées formées selon la seconde alternative.

De préférence, le pavage a pour fonction de servir de référentiel au système robotisé et/ou a pour effet de stabiliser l'assemblage lors de la fabrication.

De préférence, chaque moyen de liaison de chaque site de réception du pavage est complémentaire d'au moins un moyen de liaison d'un, de plusieurs ou de chacun des CEIs.

L'étape consistant à former et assembler une rangée ou une couche de CEIs sur un pavage peut comprendre l'utilisation d'un ou de plusieurs pavages.

De préférence, le procédé de fabrication comprend l'étape consistant à stocker individuellement, par rangée, par couche, par ensemble ou sous-ensemble et temporairement les CEIs, durant l'assemblage des CEIs et/ou préalablement à l'assemblage des CEIs, de préférence préalablement à l'étape d'assemblage des CEIs entre eux avec ou sans pavage, sur le pavage.

De préférence, chacun des CEIs stockés sur le pavage ne sont assemblés ni ne sont liés avec aucun autres des CEIs stockés.

L'étape consistant à stocker les CEIs peut comprendre l'utilisation d'un ou de plusieurs pavages qui peuvent être identiques ou différents des pavages utilisés pour l'étape consistant à former et assembler une rangée ou une couche de CEIs sur un pavage. Un ou plusieurs des pavages peut être une zone dédiée au stockage des CEIs.

De préférence, le procédé de fabrication comprend l'étape de manipulation et de transport des CEIs par le système robotisé. De préférence, l'étape de manipulation et de transport comprend, en outre, le couplage, successif et réversible, d'au moins un moyen de liaison d'un CEI avec au moins un moyen de couplage réversible du système robotisé.

De préférence, le bras articulé du système robotisé comprend le moyen de couplage.

De préférence, le procédé de fabrication comprend une étape consistant à désassembler tout ou partie des CEIs composant la structure transformable monobloc fabriqué ou en cours de fabrication ou tout ou partie d'une rangée et/ou d'une couche de CEIs par séparation d'un CEI considéré d'un ou de plusieurs des CEIs adjacents avec lesquels le CEI considéré est lié en déboitant le ou les moyens de liaison du CEI considéré du ou des moyens de liaison des CEIs adjacents avec lesquels le ou les moyens de liaison du CEI considéré coopèrent par emboitement, ou dans lesquels le ou les moyens de liaison du CEI considéré sont réciproquement emboités.

De préférence, le désassemblage est mis en œuvre par le système robotisé.

Le procédé de fabrication peut comprendre une ou plusieurs étapes de fabrication de tout ou partie des CEIs de l'ensemble de CEIs. L'étape de fabrication de tout ou partie des CEIs peut résulter de procédés de fabrication additifs, ou soustractifs voire formatifs. L'étape de fabrication peut être partie ou peut constituer l'étape consistant à fournir l'ensemble de CEIs.

De préférence, le procédé de fabrication comprend l'étape consistant à :
- sélectionner, dans une base de données ou stockage :
   - un ou des CEIs individuels présentant des conformations spatiales différentes et/ou comprenant ou étant constitués de matériaux différents, et/ou
   - un ou des sous-ensemble de CEIs parmi des sous-ensembles de CEIs présentant des conformations spatiales différentes et/ou des sous-ensembles de CEIs comprenant ou étant constitués de matériaux différents. De préférence, le procédé de fabrication comprend l'étape consistant à déterminer, à partir des CEIs individuels sélectionnés ou des sous-ensemble sélectionnés, un ou des agencements des sous-ensemble les uns par rapport aux autres dans la structure transformable de sorte que l'application d'au moins un stimulus produise la modification d'au moins une propriété de la structure transformable.

Le procédé selon l'invention est particulièrement adapté, de préférence encore spécialement conçu, pour mettre en œuvre le dispositif selon l'invention. Ainsi, toute caractéristique du procédé selon l'invention peut être intégrée dans le dispositif selon l'invention et inversement.

### Description des figures

D'autres avantages et particularités de l'invention apparaîtront à la lecture de la description détaillée de mises en œuvre et de modes de réalisation nullement limitatifs, et des dessins annexés suivants :
[Fig. 1] la FIGURE 1 est une représentation schématique de modes de réalisation de structures transformables tridimensionnelles selon l'invention illustrant la modification de conformation tridimensionnelle des structures transformables en réponse à l'application d'un stimulus,
[Fig. 2] la FIGURE 2 est une représentation schématique de modes de réalisation de structures transformables tridimensionnelles selon l'invention illustrant des exemples de répartitions spatiales de voxels actifs et de voxels passifs au sein de structures transformables,
[Fig. 3] la FIGURE 3 est une représentation schématique de deux modes de réalisation de structures transformables tridimensionnelles selon l'invention illustrant des exemples de répartitions spatiales différents de voxels actifs et de voxels passifs au sein de structures transformables,
[Fig. 4] la FIGURE 4 est une représentation schématique des deux structures transformables tridimensionnelles de la FIGURE 3 présentant chacune un agencement différent de voxels actifs et de voxels passifs illustrant la modification de conformation tridimensionnelle des structures transformables en réponse à l'application d'un stimulus,
[Fig. 5] la FIGURE 5 est une représentation schématique de mode de réalisation de voxels et de leur moyens d'accouplements,
[Fig. 6] la FIGURE 6 est une représentation schématique de mode de réalisation de voxels et de leur moyens d'accouplements,
[Fig. 7] la FIGURE 7 est une représentation schématique du principe de procédé de fabrication de structures transformables tridimensionnelles selon l'invention,
[Fig. 8] la FIGURE 8 est une représentation schématique d'un mode de réalisation d'un moyen utilisé pour la mise en œuvre du procédé de fabrication de structures transformables tridimensionnelles selon l'invention,
[Fig. 9] la FIGURE 9 est une représentation schématique d'un mode d'assemblage de voxels pouvant être utilisé pour la mise en œuvre du procédé de fabrication structures transformables tridimensionnelles selon l'invention.

### Description des modes de réalisation

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

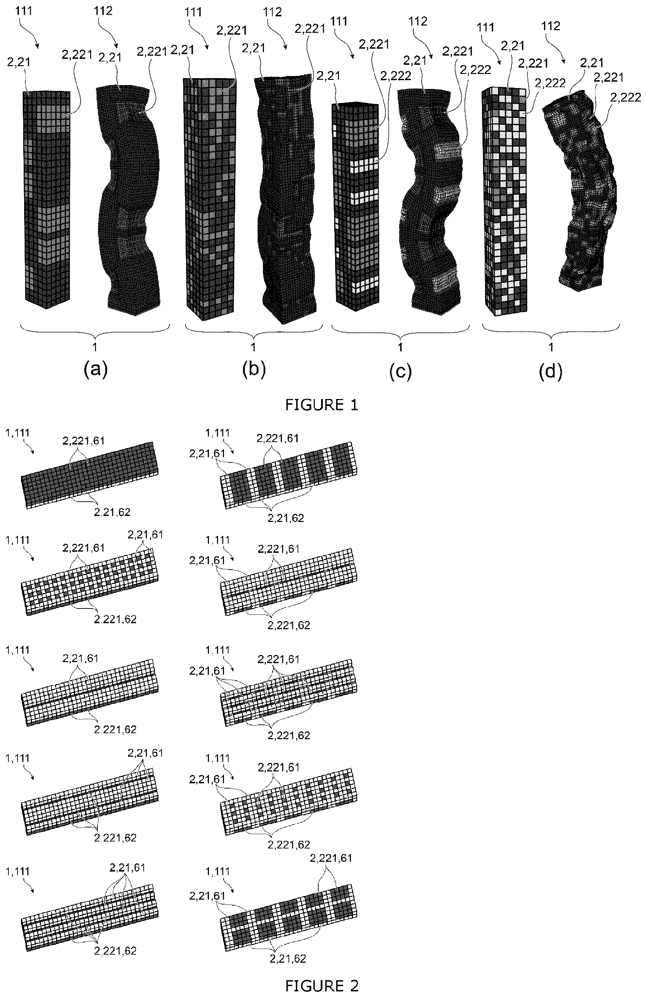

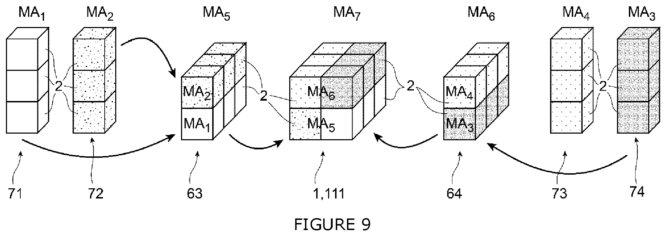

En référence aux FIGURES 1 à 9, il est décrit un mode de réalisation de l'invention.

Selon le mode de réalisation, et en référence aux FIGURES 1 à 3 et 6, il est présenté des structures transformables tridimensionnelles 1, dites structures 1, selon l'invention. Ces structures 1 comprennent un ensemble de composants élémentaires individuels 2, dit CEIs 2, formant un ensemble monobloc. Les CEIs 2 sont constitués soit d'un matériau actif soit d'un matériau inerte. Les CEIs 2 constitués d'un matériau actif sont des CEIs actifs 221 et les CEIs 2 constitués d'un matériau inerte sont des CEIs passifs 21. Les FIGURES 1, 3 et 4 sont des représentations schématiques obtenues par simulations. Selon le mode de réalisation non limitatif la simulation a été obtenue en utilisant le calcul de poutres d'Euler-Bernoulli et/ou en couplant les résultats de ce calcul avec des algorithmes génétiques.

Selon le mode de réalisation, et en référence aux structures (c) et (d) de la FIGURE 1, la structure 1 comprend, en outre, des zones d'espaces 222 ou voxels 222 vides ou ne comprenant pas de CEIs 2. La structure 1 peut comprendre uniquement des CEIs actifs 221. Toutefois, des structures 1 présentant des propriétés particulièrement intéressantes peuvent être obtenues en combinant, selon un agencement spatial adaptée, au sein de la structure 1, des voxels 222 ne comprenant pas de CEIs 2, ou de voxels comprenant des CEIs actifs 221, et de CEIs passifs 21, ou de voxels comprenant des CEIs passifs.

Les voxels 222 ne comprenant pas de CEIs 2, les CEIs actifs 221 et les CEIs passifs 21 sont spatialement disposés de manière spécifique dans la structure 1 pour qu'au moins une propriété de la structure 1 soit modifiée en réponse à l'application d'au moins un stimulus.

A titre d'exemples non limitatifs, les CEIs actifs 221 peuvent être, à titre d'exemples non limitatifs, des polymères à mémoire de forme, des alliages à mémoire de forme, des polymères électroactifs, des élastomères à cristaux liquides, des hydrogels ou des matériaux piézoélectriques. A titre d'exemples non limitatifs, les CEIs passifs 21 peuvent être des polymères, tels que des élastomères, des alliages métalliques, des céramiques, des verres.

Les CEIs 2 permettent de paver l'espace 3D. Ils peuvent être de toutes formes et de toutes tailles. A titre d'exemple, les CEIs 2 peuvent être de forme sphérique, cylindrique, ovoïde, prismatique, conique, pyramidale. A titre d'exemple, les CEIs 2 peuvent avoir une taille comprise entre 10 µm et plusieurs millimètres selon la précision du système de fabrication des CEIs 2. Typiquement, les CEIs 2 ont une taille comprise entre 5 mm et 1 cm.

Selon le mode de réalisation, les CEIs 2 formant les structures 1 présentées dans le mode de réalisation comprennent au moins six moyens de liaison 3. Hormis pour les CEIs 2 dont une ou des faces forment une face externe de la structure 1, un, plusieurs ou chaque moyen de liaison 3 d'une face d'un CEI 2 considéré est agencé pour coopérer avec un, plusieurs ou chaque moyen de liaison 3 présents sur une face d'un CEI 2 adjacent au CEI 2 considéré. Ainsi, un CEI 2 considéré est liée à au moins un des CEIs 2 qui lui sont adjacents par un, des ou chaque moyen de liaisons 3. Selon le mode de réalisation présenté, hormis les CEIs 2 comprenant une ou des faces formant une face externe de la structure 1, chaque CEI 2 de la structure 1 est lié à chacun des CEIs 2 qui lui sont adjacents.

De préférence, les moyens de liaisons 3 sont réversiblement connectables. Toutefois, l'invention n'exclue pas la liaison définitive, par exemple avec des moyens de liaisons 3 par encliquetage, d'un CEI 2 considéré avec un, plusieurs ou chacun les CEIs 2 qui lui sont adjacents.

Selon le mode de réalisation non limitatif présenté, pour chaque CEI 2, au moins un des moyens de liaison 3 d'un CEI 2 considéré est situé d'un côté du CEI 2 considéré qui est opposé à un côté du CEI 2 considéré comprenant au moins un autre des moyens de liaison 3.

Selon les modes de réalisation non limitatifs présentés aux FIGURES 1 à 3, la propriété de la structure 1 qui est modifiée en réponse à l'application d'au moins un stimulus est la conformation ou la configuration spatiale de la structure 1. Selon le mode de réalisation, les CEIs actifs 221 sont des hydrogels, les voxels 222 sont simulés par des matériaux extrêmement passifs pour correspondre au mieux à des zones d'espaces vides et les CEIs passifs 21 sont des polymères flexibles ou élastomères par exemple tels que listés précédemment. La structure 1 est dans une conformation 111 rectiligne en l'absence de stimulus. Lors de l'application du stimulus, la structure 1 se déforme pour adopter une conformation non rectiligne 112 prédéterminée. Il est possible d'agencer spatialement les CEIs actifs 221 les uns par rapport aux autres, les voxels 222 ne comprenant pas de CEIs 2 par rapport aux les CEIs actifs 221 et/ou aux CEIs passifs 21 et les CEIs passifs 21 par rapport aux CEIs actifs 221 et/ou par rapport aux voxels 222 ne comprenant pas de CEIs 2 pour que la structure se déforme selon plusieurs directions et/ou selon plusieurs modes de déformation pour aboutir à une conformation 112 voulue ou particulière lors de l'application du stimulus. En référence à la FIGURE 1, les structures 1 (a) et (c) sont, par exemple, des structures 1 issue d'une base de donnée. Selon le mode de réalisation non limitatif illustré sur la FIGURE 1, les CEIs actifs 221 sont composés d'un hydrogel et les CEIs passifs 21 sont composés un élastomère dont la transformation est opérée sous l'effet d'une stimulation thermique en milieu aqueux. A titre d'exemple, il serait également possible d'utiliser des CEIs actifs 221 composés d'élastomères à cristaux liquides ou de polymères à mémoire de forme et de provoquer une déformation similaire sous l'effet d'une stimulation thermique. Aussi, selon les structures 1 (a) et (c), on observe une succession de fléchissements le long de la structure 1 de sorte que la conformation 112 adoptée lors de la stimulation présente une succession de courbe pour et que la structure 1 présente une forme de type serpentin 112. Selon l'invention, il est proposé de modifier l'agencement spatial ou la conformation des voxels 222, des CEIs actifs 221 et des CEIs passifs 21, les uns relativement aux autres, et/ou leur nombre au sein de la structure 1 issue de la base de donnée de sorte à obtenir une meilleure transformation et/ou une transformation différente de la structure 1. Selon les modes de réalisation non limitatifs illustrés sur les structures (b) et (d), cette nouvelle configuration ou agencement des voxels 222, des CEIs actifs 221 et des CEIs passifs 21 au sein de la structure 1, les uns relativement aux autres, a été calculée de sorte à permettre des déformations supplémentaires, par exemple des torsions, le long de la structure, au sein de la structure 1. La structure 1 (b) est issue de la structure 1 (a) et la structure 1 (d) est issue de la structure 1 (c).

Toutefois, bien qu'en raison de son caractère visible et illustratif, la propriété modifiée, selon le mode de réalisation non limitatif présenté, soit la forme de la structure 1, d'autres propriétés de la structure 1 pourraient être modifiées en choisissant d'autres matériaux actifs et/ou passifs.

Sur la FIGURE 2, il est illustré des modes de réalisation de structures 1 présentant chacune un agencement spatial de CEIs actifs 221 et de CEIs passifs 21 différents. Les structures 1 présentées comprennent un empilement de deux couches 61, 62 de CEIs 2. Les structures 1 présentées sont dans une conformation 111 rectiligne en l'absence de stimulus. L'application d'un stimulus induira une déformation des structures 1 différentes de sorte que les structures 1 adoptent des conformations 112 différentes.

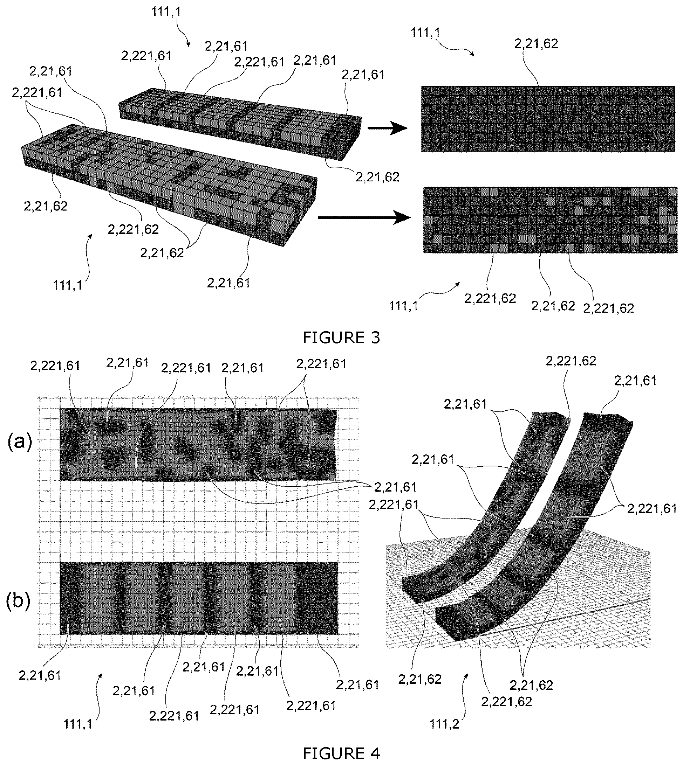

Sur la FIGURE 3, il est illustré deux structures 1 présentant chacune un agencement spatial de CEIs actifs 221 et de CEIs passifs 21 différents. Comme pour la FIGURE 3, les deux structures 1 présentées comprennent un empilement de deux couches 61, 62 de CEIs 2 et sont dans une conformation 111 rectiligne en l'absence de stimulus.

En référence à la FIGURE 4, il est illustré l'effet de l'application d'un stimulus sur chacune des deux structures 1 présentés sur la FIGURE 3. On peut observer qu'en dépit de l'agencement spatial des CEIs actifs 221 et des CEIs passifs 21 notablement différent entre les deux structures 1, l'application d'un stimulus aboutit à une conformation 112 identique lorsqu'un stimulus est appliqué. Les structures 1 fléchissent toutes deux lors de l'application du stimulus pour adopter une forme 112 courbe identique.

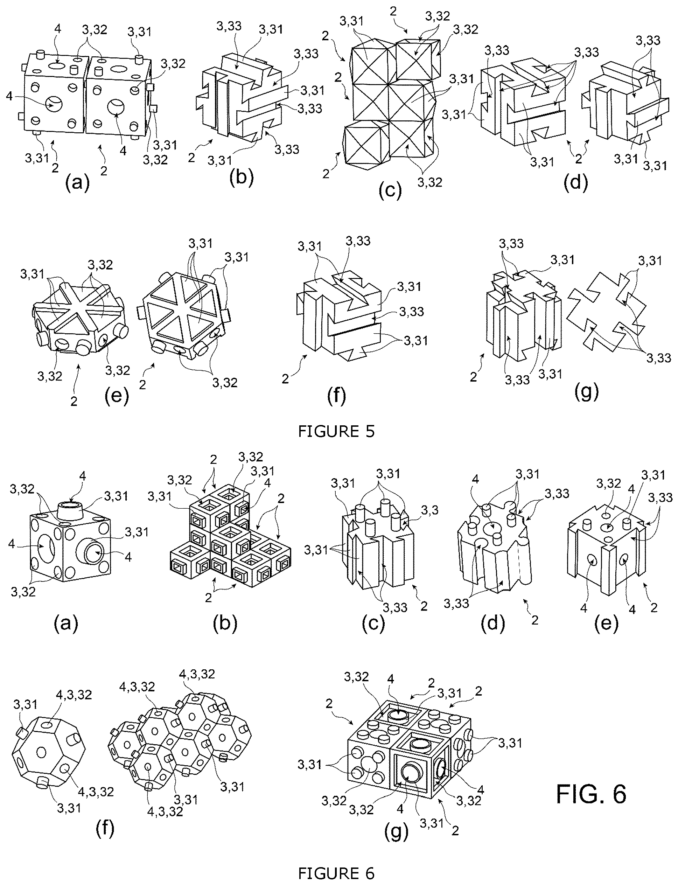

En référence aux FIGURES 5 et 6, il est illustré, à titres d'exemples non limitatifs, différents moyen de liaisons 3 envisagés dans le cadre de l'invention. Ces exemples ne sont pas limitatifs mais illustratifs. Selon le mode de réalisation, les moyens de liaisons 3 sont des moyens d'accouplement apte à lier de manière réversible un CEI 2 à un autre CEI 2.

Un moyen d'accouplement 3 selon l'invention peut être une excroissance 31, une saillie 31, un bourrelet 31, un creux 32, un évidement 32, un logement 32, une entaille 33 ou une encoche 33. Une face d'un CEI 2 peut comprendre un ou plusieurs moyens d'accouplement 3. Une face d'un CEI 2 peut présenter les mêmes moyens d'accouplements 3, c'est-à-dire un seul type de moyen d'accouplement 3. Selon l'invention, deux côtés opposés, ou deux faces opposées, d'un CEI 2 peuvent être parallèles entre eux mais ne le sont pas nécessairement. Une, plusieurs ou chaque face d'un CEI 2 considéré peut présenter des mêmes moyens d'accouplement 3 différents d'un, de plusieurs ou de chaque moyens d'accouplement 3 d'une, de plusieurs ou de chacune des autres faces du CEI 2 considéré. Un, plusieurs ou chaque moyen d'accouplement 3 d'un CEI 2 considéré peut être différent d'un, de plusieurs ou de chaque moyen d'accouplement 3 d'un, de plusieurs ou de chacun des CEIs 2 adjacents au CEI 2 considéré.

Les CEIs 2 peuvent également comprendre un conduit 4 pour le transit d'un fluide depuis un CEI 2 considéré vers un CEI 2 adjacent et inversement. Les CEIs 2 (a) de la FIGURE 5 et (a), (b), (d), (e), (f) et (g) de la FIGURE 6, comprennent un conduit 4 sur au moins deux de leurs faces. Le conduit 4 peut comprendre ou être formé, au moins en partie, par une ouverture 4 s'étendant dans ou travers la paroi du CEI 2. Le conduit peut également comprendre ou être formé par une saillie 3 s'étendant au-delà de la paroi d'un CEI 2. En outre, le conduit 4 peut également constituer, en tout ou partie, un moyen d'accouplement 3.

En référence aux CEIs 2 (c), (d) et (f) de la FIGURE 5 et (b), (f) de la FIGURE 6, chaque face d'un CEI 2 comprend un seul moyen d'accouplement 3, 31 ou 3, 32 ou 3, 33 ou 4, 3, 32 par face.

En référence aux CEIs 2 (a), (g), (e) de la FIGURE 5 et (a), (c), (d), (e) et (f) de la FIGURE 6, il peut être considéré qu'au moins une face des CEIs 2 comprend plusieurs moyens d'accouplements 3, 31 et 3, 32 ou 3, 31 et 4, 3, 32 ou 3, 31 et 3, 33. Dans ce cas, les moyens d'accouplements 3, 31 et 3, 32 ou 3, 31 et 4, 3, 32 ou 3, 31 et 3, 33 d'une face sont agencés pour coopérer avec un, des ou les moyens d'accouplement 3 d'une face d'un CEI 2 adjacent. Toutefois, il peut également être considéré que les différents moyens d'accouplement 3, 31 et 3, 32 ou 3, 31 et 4, 3, 32 ou 3, 31 et 3, 33 d'une face des CEIs 2 constituent un seul moyen d'accouplement 3. Dans ce cas, le moyens d'accouplement 3, 31 et 3, 32 ou 3, 31 et 4, 3, 32 ou 3, 31 et 3, 33 d'une face est agencé pour coopérer avec un, des ou les moyens d'accouplement 3 d'une face d'un CEI 2 adjacent.

Le ou les moyens d'accouplement 3 d'une face d'un CEI 2 considéré peuvent être différents du ou des moyens d'accouplement 3 d'une autre face du CEI 2 considéré. Cela permet de promouvoir la modification d'une propriété de la structure 1 selon une direction donnée, par exemple une déformation de la structure selon une direction donnée. Cela permet de contraindre, limiter ou empêcher la modification d'une propriété de la structure 1 selon une direction donnée, par exemple une déformation de la structure selon une direction donnée.

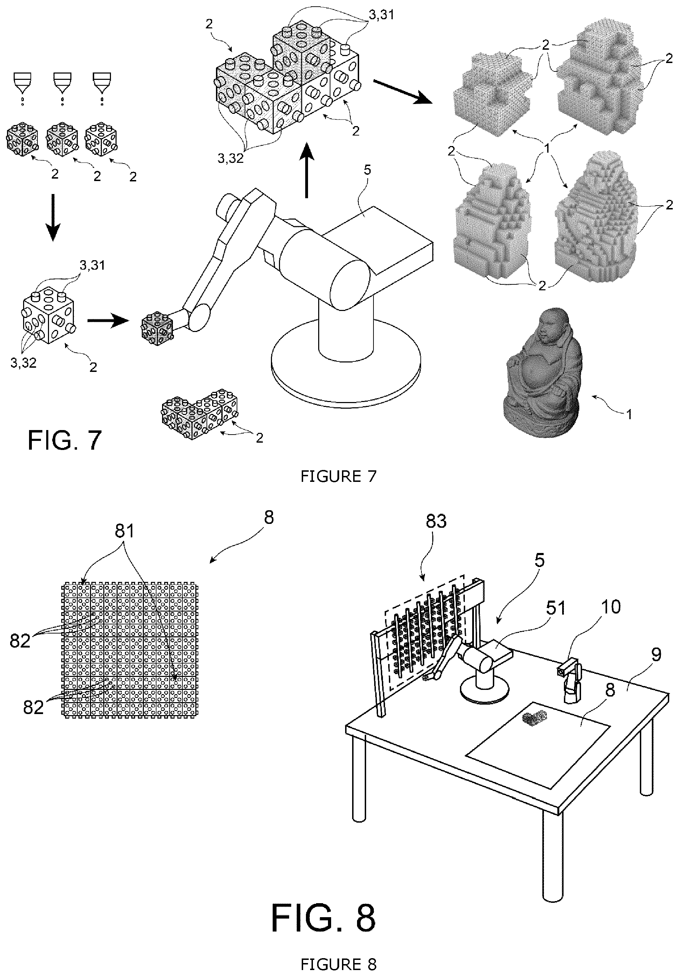

En référence aux FIGURES 7 à 9, il est illustré un mode de réalisation du procédé de fabrication de structures 1 selon l'invention.

En référence à la FIGURE 7, il est présenté une représentation schématique illustrant le concept d'un mode de réalisation du procédé de fabrication de structures 1 selon l'invention. Une première étape du procédé consiste à fournir un ensemble de CEIs 2 individuels selon l'invention. Les CEIs 2 peuvent être obtenus par tout moyen, notamment dans le commerce, sans que l'étape de conception des CEIs 2 ne fasse partie du procédé. A titre d'exemples non limitatifs, les CEIs peuvent être obtenus par des méthodes additives, de préférence par impression 3D, ou par des méthodes soustractives. Sur la FIGURE 7 est illustré, à titre d'exemple non limitatifs, l'obtention de CEIs 2 par impression 3D. L'impression 3D de CEIs en polymère, en métal et en matériau composite est illustrée.

Le procédé comprend également l'étape consistant à assembler les CEIs 2 au moyen d'un système robotisé 5. Les CEIs 2 sont assemblés par le moyen robotisé 5 en emboitant, successivement, au moins un moyen de liaison 3 d'un CEI 2 avec au moins un moyen de liaison d'un autre des CEIs 2. Les CEIs 2 sont assemblés de sorte à disposer spatialement les CEIs actifs dans la structure 1 en cours de fabrication pour qu'au moins une propriété de la structure 1 soit modifiée en réponse à l'application d'au moins un stimulus. La disposition spatiale est réalisée de manière que les CEIs actifs 221 soient disposés de manière prédéterminée les uns par rapport aux autres, par rapport aux voxels 222 ne comprenant de pas de CEIs 2 et par rapport aux CEIs passifs 21.

Selon un perfectionnement non limitatif, le procédé comprend une étape de sélection, dans une base de données, des CEIs 2 individuels actifs 221 et/ou des passifs 21 et/ou de sous-ensembles de CEIs 2 parmi des sous-ensembles de CEIs 2 comprenant des CEIs actifs 221 et/ou de CEIs passifs 21. A partir ou concomitamment à l'étape de sélection et en fonction de la modification souhaitée ou recherchée d'au moins une propriété de la structure 1, le procédé comprend une étape consistant à déterminer, à partir des CEIs 2 individuels sélectionnés et/ou des sous-ensemble sélectionnés, un ou des agencements de CEIs 2 individuels sélectionnés et/ou des sous-ensemble de CEIs 2 les uns par rapport aux autres dans la structure transformable 1 à fabriquer de sorte que l'application d'au moins un stimulus produise la modification souhaitée d'au moins une propriété souhaitée de la structure 1.

Selon le mode de réalisation non limitatif, le moyen robotisé 5 est un bras articulé 5 monté sur un poste 9 d'assemblage/désassemblage. Le bras articulé 5 comprend en son extrémité mobile un moyen de couplage réversible 51 pour saisir ou fixer les CEIs 2 à assembler ou désassembler. Le poste comprend également un pavage 8. Le pavage 8 comprend un ensemble de sites de réception 81. Chaque site de réception 81 comprend au moins un moyen de liaison réversible 82 agencé pour coopérer avec au moins un moyen de liaison 3 de chacun des CEIs 2 à assembler/désassembler. Le pavage 8 constitue une zone d'assemblage qui peut également être utilisée pour le stockage temporaire pour CEIs 2 individuels, pour une ou des rangées 71, 72, 73, 74 de CEIs 2 ou pour une ou des couches 61, 62, 63, 64 de CEIs 2. Dans le cas de rangées 71, 72, 73, 74 de CEIs 2 ou de couches 61, 62, 63, 64 de CEIs 2, un moyen d'accouplement 3, ou de préférence chaque moyen d'accouplement 3, de plusieurs des CEIs 2, de préférence de chacun des CEIs 2, dont une ou plusieurs faces forment une face externe de la structure 1, coopèrent avec un moyen de liaison réversible 82 d'un site de réception 81 distinct du pavage 8. Selon le mode de réalisation, le poste d'assemblage/désassemblage 9 comprend une zone de stockage 83 des CEIs 2 qui est uniquement dédiée au stockage des CEIs 2. Cette zone de stockage 83 peut comprend également un ensemble de sites de réception 81. Chaque site de réception 81 comprend au moins un moyen de liaison réversible 82 agencé pour coopérer avec au moins un moyen de liaison 3 de chacun des CEIs 2 à assembler/désassembler.

Le procédé de fabrication comprend également, selon une première alternative, l'étape, dite étape d'assemblage, consistant à assembler les CEIs 2 de l'ensemble, comprenant la formation d'au moins deux couches 61, 62 monobloc distinctes de CEIs 2. La formation des couches 61, 62 consiste à emboiter, successivement, au moins un moyen d'accouplement 3 d'un CEI 2 avec au moins un moyen d'accouplement 3 d'un autre des CEIs 2. Subséquemment à la formation des couches 61, 62, une couche formée 61 ou 62 est assemblée avec une autre des couches formées 62 ou 61 en emboitant au moins un moyen d'accouplement 3 de chacun des CEIs 2 d'une couche formée 61, 62 avec au moins un moyen d'accouplement 3 de chacun des CEIs 2 d'une autre des couches formées 61, 62.

Autant de couches 61, 62 que nécessaires peuvent être assemblées. En outre, une couche 61, 62 peut être assemblée sur un ensemble de couches 61, 62 déjà formé ou un ensemble de couches 61, 62 déjà formé peut être assemblé avec un autre ensemble de couches 61, 62 déjà formée.

Selon une deuxième alternative, l'étape d'assemblage consiste en la formation d'au moins trois rangées 71, 72, 73, 74 monobloc distinctes de CEIs 2. La formation des rangées 71, 72, 73, 74 consiste à emboiter, successivement, au moins un moyen d'accouplement 3 d'un CEI 2 avec au moins un moyen d'accouplement 3 d'un autre des CEIs 2. Subséquemment à la formation des rangées 71, 72, 73, 74, au moins une couche monobloc 63, 64 de CEIs 2 est formée. La formation de la couche 63, 64 consiste à assembler une rangée formée 71, 73 avec une autre des rangées formées 72, 74 en emboitant au moins un moyen d'accouplement 3 de chacun des CEIs 2 d'une rangée formée 71, 73 avec au moins un moyen d'accouplement 3 de chacun des CEIs 2 d'une autre des rangées formées 72, 74. Subséquemment à la formation de l'au moins une couche monobloc 63, 64, l'au moins une couche formée 63, 64 est assemblée :
- avec, selon une première alternative, une autre rangée formée 71, 72, ou 73, 74, ou
- avec, selon une deuxième alternative, une autre des couches formées 64, 63.

L'assemblage de l'au moins une couche formée 63, 64 avec une autre rangée formée 71, 72, ou 73, 74 ou avec une autre des couches formées 64, 63 est réalisé en emboitant au moins un moyen d'accouplement 3 de chacun des CEIs 2 de l'au moins une couche formée 63, 64 avec :
- selon la première alternative, au moins un moyen d'accouplement 3 de chacun des CEIs 2 d'une autre rangée formée 71, 72, ou 73, 74, ou
- selon la deuxième alternative, au moins un moyen d'accouplement 3 de chacun des CEIs 2 d'une autre des couches formées 64, 63.

Les deux alternatives de l'étape d'assemblage sont combinables et peuvent être mise en œuvre en parallèle.

L'étape de formation et/ou d'assemblage de la rangée 71, 72, 73, 74 ou de la couche 61, 62, 63, 64 de CEIs 2 peut être réalisée en tout ou partie sur le pavage 8. L'étape de formation et/ou d'assemblage de la rangée 71, 72, 73, 74 ou de la couche 61, 62, 63, 64 de CEIs 2 sur le pavage 8 consiste à emboiter au moins un moyen d'accouplement 3 de chacun des CEIs 2 de la rangée 71, 72, 73, 74 ou d'une rangée de la couche 61, 62, 63, 64 ou de la couche 61, 62, 63, 64 avec au moins un moyen de liaison réversible 82 d'un site de réception 81 différent du pavage 8.

Un avantage du procédé de fabrication de la structure 1 et de la structure 1 fabriquée ou en cours de fabrication est qu'il est possible de désassembler tout ou partie des CEIs 2 composant la structure 1 fabriquée ou en cours de fabrication ou de rangées 71, 72, 73, 74 de CEIs 2 ou de couches 61, 62, 63, 64 de CEIs 2 stockées ou non sur le pavage 8. Ainsi, il est possible de séparer ou détacher un CEI 2 considéré d'un ou de plusieurs des CEIs 2 adjacents avec lesquels le CEI 2 considéré est lié en déboitant le ou les moyens d'accouplement 3 du CEI 2 considéré coopérant par emboitement avec le ou les moyens d'accouplement 3 des CEIs 2 adjacents avec lesquels le CEI 2 considéré est lié.

Bien sûr, l'invention n'est pas limitée aux exemples qui viennent d'être décrits et de nombreux aménagements peuvent être apportés à ces exemples sans sortir du cadre de l'invention.

Ainsi, dans des variantes combinables entre elles des modes de réalisation précédemment décrits :
- pour chaque CEI 2, un CEI 2 considéré comprend, un moyen de connexion électrique 4, de préférence au moins trois moyen de connexions électriques 4 entre le CEI 2 considéré et un CEI 2 adjacent au CEI 2 considéré,
- le ou les moyens d'accouplement 3 d'un CEI 2 constituent le ou les moyen de connexions électriques 4 du CEI 2.

De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Structure transformable tridimensionnelle (1) contenant un ensemble de composants élémentaires individuels (2), dits CEIs ou voxels, formant un ensemble monobloc, un CEI comprend un matériau actif ou inerte, au moins une partie de l'ensemble de CEIs comprend des CEIs actifs (221, 222) et des CEIs passifs (21) comprenant au moins trois moyens de liaison (3) ; chaque moyen de liaison d'un CEI considéré est agencé pour coopérer avec au moins un moyen de liaison d'un CEI adjacent au CEI considéré de sorte à lier le CEI considéré au CEI adjacent et, pour l'au moins une partie de l'ensemble de CEIs, au moins un des moyens de liaison d'un CEI considéré est situé d'un côté opposé à au moins un autre des moyens de liaison du CEI considéré ; **caractérisé en ce que** au moins quatre des côtés de chacun des CEIs de l'au moins une partie de l'ensemble de CEIs comprenant au moins trois moyens de liaison comprennent chacun au moins un moyen de liaison et les CEIs actifs sont spatialement disposés dans la structure transformable pour qu'au moins une propriété de la structure transformable soit modifiée en réponse à l'application d'au moins un stimulus, l'au moins un stimulus étant électrique et/ou un champ électrique et/ou un champ magnétique et/ou une variation de température et/ou une onde électromagnétique et/ou un composé environnant la structure transformable ou une variation d'une concentration d'un composé environnant la structure transformable.

2. Structure transformable tridimensionnelle (1) selon la revendication 1, dans lequel au moins un des moyens de liaison (3) est un moyen d'accouplement.

3. Structure transformable tridimensionnelle (1) selon la revendication 2, dans lequel un moyen d'accouplement (3) comprend :
- au moins une excroissance (31) ou une saillie coopérant avec un creux (32) ou un évidement ou un logement, et/ou
- une entaille (33) ou une encoche coopérant avec une entaille ou une encoche, et/ou
- une entaille ou une encoche coopérant avec au moins une excroissance ou une saillie, et/ou
- au moins une excroissance ou une saillie coopérant avec au moins une surface d'un CEI.

4. Structure transformable tridimensionnelle (1) selon l'une des revendications précédentes, dans lequel chacun des CEIs (2) comprend quatre côtés ou plus et dans lequel au moins trois des côtés de chacun des CEIs de l'au moins une partie de l'ensemble de CEIs comprenant au moins trois moyens de liaison (3) comprennent chacun au moins un moyen de liaison et lesdits au moins trois côtés de chacun des CEIs de l'au moins une partie de l'ensemble de CEIs comprenant au moins trois moyens de liaison sont chacun liés à un côté d'un autre des CEIs de la structure transformable par au moins un moyen de liaison.

5. Structure transformable tridimensionnelle (1) selon l'une des revendications précédentes, dans lequel chacun des CEIs (2) comprend, en outre, au moins trois moyens de connexion (3) ; chaque moyen de connexion d'un CEI considéré est agencé pour coopérer avec au moins un moyen de connexion d'un CEI adjacent au CEI considéré de sorte à former :
- un conduit (4) pour le transit d'un fluide depuis le CEI considéré vers le CEI adjacent, ou inversement, ou
- une connexion électrique (4) entre le CEI considéré et le CEI adjacent.

6. Structure transformable tridimensionnelle (1) selon la revendication précédente, dans lequel au moins un stimulus :
- est électrique et/ou est une variation de température et/ou est une force ou contrainte ou pression mécanique et/ou est un composé circulant dans la structure transformable ou une variation d'une concentration d'un composé circulant dans la structure transformable,
- transite dans la structure transformable par les moyens de connexion (3).

7. Structure transformable tridimensionnelle (1) selon l'une quelconque des revendications précédentes, dans lequel la modification d'au moins une propriété de la structure transformable est un changement de forme et/ou de volume et/ou de propriétés optiques et/ou de propriétés mécaniques et/ou de propriétés chimiques et/ou de conductivité thermique et/ou de conductivité électrique.

8. Structure transformable tridimensionnelle (1) selon l'une quelconque des revendications précédentes, dans lequel les CEIs (2) comprennent ou sont constitués d'un polymère et/ou d'un métal et/ou d'une céramique et/ou d'un gel et/ou d'un matériau piézo-électrique et/ou d'un matériau à mémoire de forme.

9. Procédé de fabrication d'une structure transformable tridimensionnelle (1) monobloc comprenant les étapes consistant à :
- fournir un ensemble de composants élémentaires individuels (2), dits CEIs, un CEIs comprenant un matériau actif ou inerte ; au moins une partie des CEIs de l'ensemble de CEIs comprend des CEIs actifs (221, 222) et des CEIs passifs (21) comprenant au moins trois moyens de liaison (3) et, pour l'au moins une partie des CEIs de l'ensemble de CEIs, au moins un des moyens de liaison d'un CEI considéré est situé d'un côté opposé à au moins un autre des moyens de liaison du CEI considéré et **caractérisé en ce que** au moins quatre des côtés de chacun des CEIs de l'au moins une partie de l'ensemble de CEIs comprenant au moins trois moyens de liaison comprennent chacun au moins un moyen de liaison et ,
- assembler, via un système robotisé (5), les CEIs de l'ensemble en emboitant, successivement, au moins un moyen de liaison d'un CEI avec au moins un moyen de liaison d'un autre des CEIs et disposer spatialement les CEIs actifs dans l'assemblage pour qu'au moins une propriété de la structure transformable tridimensionnelle soit modifiée en réponse à l'application d'au moins un stimulus, l'au moins un stimulus étant électrique et/ou un champ électrique et/ou un champ magnétique et/ou une variation de température et/ou une onde électromagnétique et/ou un composé environnant la structure transformable ou une variation d'une concentration d'un composé environnant la structure transformable.

10. Procédé selon la revendication 9, dans lequel l'étape consistant à assembler les CEIs de l'ensemble, dite étape d'assemblage, comprend :
• la formation d'au moins deux couches (61, 62) monobloc distinctes de CEIs, en emboitant, successivement, au moins un moyen de liaison d'un CEI avec au moins un moyen de liaison d'un autre des CEIs, puis
• l'assemblage d'une couche formée (61) avec une autre des couches formées (62) en emboitant au moins un moyen de liaison de chacun des CEIs d'une couche formée avec au moins un moyen de liaison de chacun des CEIs d'une autre des couches formées, ou
• la formation d'au moins trois rangées (71, 72, 73, 74) monobloc distinctes de CEIs, en emboitant, successivement, au moins un moyen de liaison d'un CEI avec au moins un moyen de liaison d'un autre des CEIs, puis
• l'assemblage d'une rangée formée (71, 73) avec une autre des rangées formées (72, 74) , en emboitant au moins un moyen de liaison de chacun des CEIs d'une rangée formée avec au moins un moyen de liaison de chacun des CEIs d'une autre des rangées formées, pour former au moins une couche monobloc (63, 64) de CEIs, puis
• l'assemblage de la couche formée avec une autre rangée formée ou, respectivement, avec une autre des couches formées (63) en emboitant au moins un moyen de liaison de chacun des CEIs d'une couche formée avec au moins un moyen de liaison de chacun des CEIs d'une autre rangée formée ou, respectivement, avec au moins un moyen de liaison de chacun des CEIs d'une autre des couches formées (64).

11. Procédé selon la revendication 10, comprenant l'étape consistant à former et assembler une rangée (71, 72, 73, 74) ou une couche (61, 62, 63, 64) de CEIs (2) sur un pavage (8), le pavage comprend un ensemble de sites de réception (81) et chaque site de réception comprend au moins un moyen de liaison réversible (82) agencé pour coopérer avec au moins un moyen de liaison (3) d'au moins un CEI, ladite étape de formation et d'assemblage de la rangée ou de la couche de CEIs sur le pavage consiste à emboiter au moins un moyen de liaison de chacun des CEIs de la rangée ou de la couche avec au moins un moyen de liaison réversible d'un site de réception différent.

12. Procédé selon la revendication 11, comprenant l'étape consistant à stocker individuellement, par rangée (71, 72, 73, 74) ou par couche (61, 62, 63, 64) et temporairement les CEIs (2), préalablement à l'assemblage des CEIs ou durant l'assemblage des CEIs, sur le pavage (8).

13. Procédé selon l'une des revendications 9 à 12, comprenant l'étape de manipulation et de transport des CEIs (2) par le système robotisé (5), ladite étape de manipulation et de transport comprenant, en outre, le couplage, successif et réversible, d'au moins un moyen de liaison (3) d'un CEI avec au moins un moyen de couplage réversible (51) du système robotisé.

14. Procédé selon l'une des revendications 10 à 12 ou selon la revendication 13 prise en combinaison avec la revendication 10, comprenant une étape consistant à désassembler tout ou partie des CEIs (2) composant la structure transformable monobloc (1) fabriquée ou en cours de fabrication ou tout ou partie d'une rangée (71, 72, 73, 74) et/ou d'une couche (61, 62, 63, 64) de CEIs par séparation d'un CEI considéré d'un ou de plusieurs des CEIs adjacents avec lesquels le CEI considéré est lié en déboitant le ou les moyens de liaison (3) du CEI considéré du ou des moyens de liaison des CEIs adjacents avec lesquels le ou les moyens de liaison du CEI considéré coopèrent par emboitement.

15. Procédé selon l'une des revendications 9 à 14, comprenant les étapes consistant à :
- sélectionner, dans une base de données :
• un ou des CEIs (2) individuels présentant des conformations spatiales différentes et/ou comprenant ou étant constitués de matériaux différents, et/ou
• un ou des sous-ensemble de CEIs parmi des sous-ensembles de CEIs présentant des conformations spatiales différentes et/ou des sous-ensembles de CEIs comprenant ou étant constitués de matériaux différents,
- déterminer, à partir des CEIs individuels sélectionnés et/ou des sous-ensemble sélectionnés, un ou des agencements des CEIs individuels sélectionnés et/ou des sous-ensemble les uns par rapport aux autres dans la structure transformable (1) de sorte que l'application de l'au moins un stimulus produise la modification de au moins une propriété de la structure transformable.

## Patentansprüche

1. Dreidimensionale, transformierbare Struktur (1), die einen Satz von individuellen elementaren Komponenten (2), sogenannten IECs oder Voxel, enthält, die eine einteilige Einheit bilden, wobei eine IEC ein aktives oder inertes Material umfasst, mindestens ein Teil des Satzes von IECs aktive IECs (221, 222) und passive IECs (21) umfasst, die mindestens drei Verbindungsmittel (3) umfassen; wobei jedes Verbindungsmittel einer betrachteten IEC so angeordnet ist, dass es mit mindestens einem Verbindungsmittel einer an die betrachtete IEC angrenzenden IEC zusammenwirkt, um die betrachtete IEC mit der angrenzenden IEC zu verbinden, und wobei sich bei dem mindestens einen Teil des Satzes der IECs mindestens eines der Verbindungsmittel einer betrachteten IEC auf einer gegenüberliegenden Seite von mindestens einem anderen der Verbindungsmittel der betrachteten IEC befindet; **dadurch gekennzeichnet, dass** mindestens vier der Seiten jeder der IECs des mindestens einen Teils des Satzes von IECs, der mindestens drei Verbindungsmittel umfasst, jeweils mindestens ein Verbindungsmittel umfassen und die aktiven IECs in der transformierbaren Struktur räumlich so angeordnet sind, dass mindestens eine Eigenschaft der transformierbaren Struktur als Reaktion auf die Anwendung von mindestens einem Stimulus modifiziert wird, wobei der mindestens eine Stimulus elektrisch ist und/oder ein elektrisches Feld und/oder ein magnetisches Feld und/oder eine Temperaturänderung und/oder eine elektromagnetische Welle und/oder eine die transformierbare Struktur umgebende Verbindung oder eine Änderung einer Konzentration einer die transformierbare Struktur umgebenden Verbindung ist.

2. Dreidimensionale, transformierbare Struktur (1) nach Anspruch 1, wobei mindestens eines der Verbindungsmittel (3) ein Koppelmittel ist.

3. Dreidimensionale, transformierbare Struktur (1) nach Anspruch 2, wobei ein Koppelmittel (3) Folgendes umfasst:
- mindestens eine Ausbuchtung (31) oder einen Vorsprung, die bzw. der mit einer Vertiefung (32) oder einer Aussparung oder einer Aufnahme zusammenwirkt, und/oder
- einen Ausschnitt (33) oder eine Kerbe, der bzw. die mit einem Ausschnitt oder einer Kerbe zusammenwirkt, und/oder
- einen Ausschnitt oder eine Kerbe, der bzw. die mit mindestens einer Ausbuchtung oder einem Vorsprung zusammenwirkt, und/oder
- mindestens eine Ausbuchtung oder einen Vorsprung, die bzw. der mit mindestens einer Oberfläche einer IEC zusammenwirkt.

4. Dreidimensionale, transformierbare Struktur (1) nach einem der vorhergehenden Ansprüche, wobei jede der IECs (2) vier oder mehr Seiten umfasst und wobei mindestens drei der Seiten jeder der IECs des mindestens einen Teils des Satzes von IECs mindestens drei Verbindungsmittel (3) umfassen, die jeweils mindestens ein Verbindungsmittel umfassen, und wobei die mindestens drei Seiten jeder der IECs des mindestens einen Teils des Satzes von IECs, die mindestens drei Verbindungsmittel umfassen, jeweils mit einer Seite einer anderen der IECs der transformierbaren Struktur durch mindestens ein Verbindungsmittel verbunden sind.

5. Dreidimensionale, transformierbare Struktur (1) nach einem der vorhergehenden Ansprüche, wobei jede der IECs (2) ferner mindestens drei Verbindungsmittel (3) umfasst; wobei jedes Verbindungsmittel einer betrachteten IEC so angeordnet ist, dass es mit mindestens einem Verbindungsmittel einer an die betrachtete IEC angrenzenden IEC zusammenwirkt, um Folgendes zu bilden:
- eine Leitung (4) für den Durchfluss eines Fluids von der betrachteten IEC zu der benachbarten IEC oder umgekehrt, oder
- eine elektrische Verbindung (4) zwischen der betrachteten IEC und der benachbarten IEC.

6. Dreidimensionale, transformierbare Struktur (1) nach dem vorhergehenden Anspruch, wobei mindestens ein Stimulus:
- elektrisch ist und/oder eine Temperaturänderung ist und/oder eine mechanische Kraft oder Beanspruchung oder ein mechanischer Druck ist und/oder eine in der transformierbaren Struktur zirkulierende Verbindung ist oder eine Konzentrationsänderung einer in der transformierbaren Struktur zirkulierenden Verbindung ist,
- über die Verbindungsmittel (3) in die transformierbare Struktur übergeht.

7. Dreidimensionale, transformierbare Struktur (1) nach einem der vorhergehenden Ansprüche, wobei die Modifikation mindestens einer Eigenschaft der transformierbaren Struktur eine Änderung der Form und/oder des Volumens und/oder der optischen Eigenschaften und/oder der mechanischen Eigenschaften und/oder der chemischen Eigenschaften und/oder der Wärmeleitfähigkeit und/oder der elektrischen Leitfähigkeit ist.

8. Dreidimensionale, transformierbare Struktur (1) nach einem der vorhergehenden Ansprüche, wobei die IECs (2) ein Polymer und/oder ein Metall und/oder eine Keramik und/oder ein Gel und/oder ein piezoelektrisches Material und/oder ein Formgedächtnismaterial umfassen oder aus diesen bestehen.

9. Verfahren zur Herstellung einer einteiligen dreidimensionalen, transformierbaren Struktur (1), das die folgenden Schritte umfasst:
- Bereitstellen eines Satzes von individuellen elementaren Komponenten (2), sogenannten IECs, wobei eine IEC ein aktives oder inertes Material umfasst; mindestens ein Teil der IECs des Satzes von ICEs aktive IECs (221, 222) und passive IECs (21) umfasst, die mindestens drei Verbindungsmittel (3) umfassen, und wobei sich bei dem mindestens einen Teil der IECs des Satzes von ICEs mindestens eines der Verbindungsmittel einer betrachteten IEC auf einer auf einer Seite befindet, die mindestens einem anderen der Verbindungsmittel der betrachteten IEC gegenüberliegt, und **dadurch gekennzeichnet ist, dass** mindestens vier der Seiten jeder der IECs des mindestens einen Teils des Satzes von IECs mindestens drei Verbindungsmittel umfassen, die jeweils mindestens ein Verbindungsmittel umfassen, und
- Zusammenfügen der IECs des Satzes mittels eines Robotersystems (5), indem nacheinander mindestens ein Verbindungsmittel einer IEC mit mindestens einem Verbindungsmittel einer anderen der IECs ineinander gesteckt wird, und räumliches Anordnen der aktiven IECs in der Anordnung, so dass mindestens eine Eigenschaft der dreidimensionalen, transformierbaren Struktur als Reaktion auf die Anwendung von mindestens einem Stimulus modifiziert wird, wobei der mindestens eine Stimulus elektrisch ist und/oder ein elektrisches Feld und/oder ein magnetisches Feld und/oder eine Temperaturänderung und/oder eine elektromagnetische Welle und/oder eine die transformierbare Struktur umgebende Verbindung oder eine Änderung einer Konzentration einer die transformierbare Struktur umgebenden Verbindung ist.

10. Verfahren nach Anspruch 9, wobei der Schritt, der darin besteht, die IECs des Satzes zusammenzufügen, der sogenannte Montageschritt, Folgendes umfasst:
• Bilden von mindestens zwei getrennten einteiligen Schichten (61, 62) aus IECs, indem nacheinander mindestens ein Verbindungsmittel einer IECs mit mindestens einem Verbindungsmittel einer anderen der IECs ineinander gesteckt wird, dann
• Zusammenfügen einer gebildeten Schicht (61) mit einer anderen der gebildeten Schichten (62), indem mindestens ein Verbindungsmittel jeder der IECs einer gebildeten Schicht mit mindestens einem Verbindungsmittel jeder der IECs einer anderen der gebildeten Schichten ineinander gesteckt wird, oder
• Bilden von mindestens drei getrennten einteiligen Reihen (71, 72, 73, 74) aus IECs, indem nacheinander mindestens ein Verbindungsmittel einer IEC mit mindestens einem Verbindungsmittel einer anderen der IEC ineinander gesteckt wird, dann
• Zusammenfügen einer gebildeten Reihe (71, 73) mit einer anderen der gebildeten Reihen (72, 74), indem mindestens ein Verbindungsmittel jeder der IECs einer gebildeten Reihe mit mindestens einem Verbindungsmittel jeder der IECs einer anderen der gebildeten Reihen ineinander gesteckt wird, um mindestens eine einteilige Schicht (63, 64) aus IECs zu bilden, dann
• Zusammenfügen der gebildeten Schicht mit einer anderen gebildeten Reihe bzw. mit einer anderen der gebildeten Schichten (63), indem mindestens ein Verbindungsmittel jeder der IECs einer gebildeten Schicht mit mindestens einem Verbindungsmittel jeder der IECs einer anderen gebildeten Reihe bzw. mit mindestens einem Verbindungsmittel jeders der IECs einer anderen der gebildeten Schichten (64) ineinander gesteckt wird.

11. Verfahren nach Anspruch 10, umfassend den Schritt des Bildens und Zusammenfügens einer Reihe (71, 72, 73, 74) oder einer Schicht (61, 62, 63, 64) aus IECs (2) auf einer Pflasterung (8), wobei die Pflasterung einen Satz von Aufnahmestellen (81) umfasst und jede Aufnahmestelle mindestens ein umkehrbares Verbindungsmittel (82) umfasst, das so angeordnet ist, dass es mit mindestens einem Verbindungsmittel (3) von mindestens einer IEC zusammenwirkt, wobei der Schritt des Bildens und des Zusammenfügens des Satzes oder der Schicht aus IECs auf der Pflasterung darin besteht, mindestens ein Verbindungsmittel jeder der IECs der Reihe oder der Schicht mit mindestens einem umkehrbaren Verbindungsmittel einer anderen Aufnahmestelle ineinander zu stecken.

12. Verfahren nach Anspruch 11, umfassend den Schritt, der darin besteht, vor oder während des Zusammenfügens der IECs die IECs (2) individuell pro Reihe (71, 72, 73, 74) oder pro Schicht (61, 62, 63, 64) und vorübergehend auf der Pflasterung (8) abzulegen.

13. Verfahren nach einem der Ansprüche 9 bis 12, umfassend den Schritt des Handhabens und des Transportierens der IECs (2) durch das Robotersystem (5), wobei der Schritt des Handhabens und des Transportierens ferner das aufeinanderfolgende und umkehrbare Koppeln von mindestens einem Verbindungsmittel (3) einer IEC mit mindestens einem umkehrbaren Koppelmittel (51) des Robotersystems umfasst.

14. Verfahren nach einem der Ansprüche 10 bis 12 oder nach Anspruch 13 in Kombination mit Anspruch 10, umfassend einen Schritt, der darin besteht, alle oder einen Teil der IECs (2), aus denen die hergestellte oder in der Herstellung befindliche einteilige transformierbare Struktur (1) besteht, oder alle oder einen Teil einer Reihe (71, 72, 73, 74) und/oder einer Schicht (61, 62, 63, 64) aus IECs durch Trennung einer betrachteten IEC von einer oder mehreren der benachbarten IECs, mit denen die betrachtete IEC verbunden ist, zu zerlegen, indem das oder die Verbindungsmittel (3) der betrachteten IEC von dem oder den Verbindungsmitteln der benachbarten IECs, mit denen das oder die Verbindungsmittel der betrachteten IEC durch Steckverbindung zusammenwirken, getrennt werden.

15. Verfahren nach einem der Ansprüche 9 bis 14, das die folgenden Schritte umfasst:
- Auswählen in einer Datenbank:
• einer oder mehrerer individueller IECs (2), die unterschiedliche räumliche Konformitäten aufweisen und/oder unterschiedliche Materialien umfassen oder aus diesen bestehen, und/oder
• eine oder mehrere Untersätze von IECs aus Untersätzen von IECs mit unterschiedlichen räumlichen Konformitäten und/oder Untersätzen von IECs, die unterschiedliche Materialien umfassen oder aus diesen bestehen,
- Bestimmen, anhand der ausgewählten individuellen IECs und/oder der ausgewählten Untersätze, einer oder mehrerer Anordnungen der ausgewählten individuellen IECs und/oder Untersätze zueinander in der transformierbaren Struktur (1), so dass die Anwendung des mindestens einen Stimulus die Modifikation mindestens einer Eigenschaft der transformierbaren Struktur bewirkt.

## Claims

1. Three-dimensional transformable structure (1) containing a set of individual elementary components (2), so-called IECs or voxels, forming a single-piece set, an IEC comprises an active or inert material, at least one portion of the set of IECs comprises active IECs (221, 222) and passive IECs (21) comprising at least three connecting means (3); each connecting means of a considered IEC is arranged to cooperate with at least one connecting means of an IEC adjacent to the considered IEC so as to connect the considered IEC to the adjacent IEC and, for the at least one portion of the set of IECs, at least one of the connecting means of a considered IEC is located on one side opposite to at least another one of the connecting means of the considered IEC; **characterised in that** at least four of the sides of each of the IECs of the at least one portion of the set of IECs comprising at least three connecting means each comprises at least one connecting means and the active IECs are spatially disposed in the transformable structure so that at least one property of the transformable structure is modified in response to the application of at least one stimulus, the at least one stimulus being electrical and/or an electrical field and/or a magnetic field and/or a temperature variation and/or an electromagnetic wave and/or a compound surrounding the transformable structure or a variation in a concentration of a compound surrounding the transformable structure.

2. Three-dimensional transformable structure (1) according to claim 1, wherein at least one of the connecting means (3) is a coupling means.

3. Three-dimensional transformable structure (1) according to claim 2, wherein a coupling means (3) comprises:
- at least one excrescence (31) or a projection cooperating with a recess (32) or a hollow or an indentation, and/or
- a cutout (33) or a notch cooperating with a cutout or a notch, and/or
- a cutout or a notch cooperating with at least one excrescence or a projection, and/or
- at least one excrescence or a projection cooperating with at least one surface of an IEC.

4. Three-dimensional transformable structure (1) according to one of the preceding claims, wherein each of the IECs (2) comprises four or more sides and wherein at least three of the sides of each of the IECs of the at least one portion of the set of IECs comprising at least three connecting means (3) each comprise at least one connecting means and said at least three sides of each of the IECs of the at least one portion of the set of IECs comprising at least three connecting means each connected to a side of another one of the IECs of the transformable structure by at least one connecting means.

5. Three-dimensional transformable structure (1) according to one of the preceding claims, wherein each of the IECs (2) further comprises at least three connecting means (3); each connecting means of a considered IEC is arranged so as to cooperate with at least one connecting means of an IEC adjacent to the considered IEC so as to form:
- a conduit (4) for the transit of a fluid from the considered IEC towards the adjacent IEC, or vice versa, or
- an electrical connection (4) between the considered IEC and the adjacent IEC.

6. Three-dimensional transformable structure (1) according to the preceding claim, wherein at least one stimulus:
- is electric and/or is a temperature variation and/or is a mechanical force or stress or pressure and/or is a compound circulating in the transformable structure or a variation in a concentration of a compound circulating in the transformable structure,
- transits in the transformable structure via the connecting means (3).

7. Three-dimensional transformable structure (1) according to any one of the preceding claims, wherein the modification of at least one property of the transformable structure is a change in shape and/or volume and/or optical properties and/or mechanical properties and/or chemical properties and/or thermal conductivity and/or electrical conductivity.

8. Three-dimensional transformable structure (1) according to any one of the preceding claims, wherein the IECs (2) comprise or are formed by a polymer and/or a metal and/or a ceramic material and/or a gel and/or a piezoelectric material and/or a shape-memory material.

9. Method for manufacturing a single-piece three-dimensional transformable structure (1) comprising the steps of:
- providing a set of individual elementary components (2), so-called IECs, an IEC comprising an active or inert material; at least one portion of the IECs of the set of IECs comprises active IECs (221, 222) and passive IECs (21) comprising at least three connecting means (3) and, for the at least one portion of the IECs of the set of IECs, at least one of the connecting means of a considered IEC is located on a side opposite to at least aother one of the connecting means of the considered IEC and **characterised in that** at least four of the sides of each of the IECs of the at least one portion of the set of IECs comprising at least three connecting means each comprises at least one connecting means and
- assembling, via a robotic system (5), the IECs of the assembly by successively interlocking at least one connecting means of an IEC with at least one connecting means of another one of the IECs and spatially disposing the active IECs in the assembly so that at least one property of the three-dimensional transformable structure is modified in response to the application of at least one stimulus, the at least one stimulus being electrical and/or an electrical field and/or a magnetic field and/or a temperature variation and/or an electromagnetic wave and/or a compound surrounding the transformable structure or a variation in a concentration of a compound surrounding the transformable structure.

10. Method according to claim 9, wherein the step of assembling the IECs of the set, so-called assembly step, comprises:
• forming at least two distinct single-piece layers (61, 62) of IECs, by successively interlocking at least one connecting means of an IEC with at least one connecting means of another one of the IECs, then
• assembling a formed layer (61) with another one of the formed layers (62) by interlocking at least one connecting means of each of the IECs of a formed layer with at least one connecting means of each of the IECs of another one of the formed layers, or
• forming at least three distinct single-piece rows (71, 72, 73, 74) of IECs, by successively interlocking at least one connecting means of an IEC with at least one connecting means of another one of the IECs, then
• assembling a formed row (71, 73) with another one of the formed rows (72, 74), by interlocking at least one connecting means of each of the IECs of a formed row with at least one connecting means of each of the IECs of another one of the formed rows, to form at least one single-piece layer (63, 64) of IECs, then
• assembling the formed layer with another formed row or, respectively, with another one of the formed layers (63) by interlocking at least one connecting means of each of the IECs of a formed layer with at least one connecting means of each of the IECs of another formed row or, respectively, with at least one connecting means of each of the IECs of another one of the formed layers (64).

11. Method according to claim 10, comprising the step of forming and assembling a row (71, 72, 73, 74) or a layer (61, 62, 63, 64) of IECs (2) on a paving (8), the paving comprises a set of receiving sites (81) and each receiving site comprises at least one reversible connecting means (82) arranged so as to cooperate with at least one connecting means (3) of at least one IEC, said step of forming and assembling the row or the layer of IECs on the paving involves interlocking at least one connecting means of each of the IECs of the row or the layer with at least one reversible connecting means of a different receiving site.

12. Method according to claim 11, comprising the step of storing the IECs (2) individually, per row (71, 72, 73, 74) or per layer (61, 62, 63, 64), and temporarily, prior to the assembly of the IECs or during the assembly of the IECs, on the paving (8).

13. Method according to one of claims 9 to 12, comprising the step of handling and transporting the IECs (2) by the robotic system (5), said handling and transport step further comprising coupling, successively and reversibly, at least one connecting means (3) of an IEC with at least one reversible coupling means (51) of the robotic system.

14. Method according to one of claims 10 to 12 or according to claim 13 considered in combination with claim 10, comprising a step of disassembling all or some of the IECs (2) composing the single-piece transformable structure (1) manufactured or being manufactured or all or some of a row (71, 72, 73, 74) and/or of a layer (61, 62, 63, 64) of IECs by separating a considered IEC from one or more of the adjacent IECs with which the considered IEC is connected by disengaging the one or more connecting mean(s) (3) of the considered IEC from the one or more connecting mean(s) of the adjacent IECs with which the one or more connecting mean(s) of the considered IEC cooperate by interlocking.

15. Method according to one of claims 9 to 14, comprising the steps of:
- selecting, in a database:
• one or more individual IECs (2) having different spatial formations and/or comprising or being formed by different materials, and/or
• one or more subset(s) of IECs among subsets of IECs having different spatial formations and/or subsets of IECs comprising or being formed by different materials,
- determining, from the selected individual IECs and/or the selected subsets, one or more arrangement(s) of the selected individual IECs and/or of the subsets with respect to one another in the transformable structure (1) so that the application of the at least one stimulus results in the modification of at least one property of the transformable structure.
